(19) Europäisches Patentamt
European Patent Office
Office européen des brevets

(11) EP 1 775 312 A1

(12) EUROPEAN PATENT APPLICATION
published in accordance with Art. 158(3) EPC

(43) Date of publication:
**18.04.2007 Bulletin 2007/16**

(21) Application number: **05765406.3**

(22) Date of filing: **29.06.2005**

(51) Int Cl.:
***C08F 32/00*** *(2006.01)* ***C08L 45/00*** *(2006.01)*
***G02B 1/04*** *(2006.01)*

(86) International application number:
**PCT/JP2005/011900**

(87) International publication number:
**WO 2006/006399 (19.01.2006 Gazette 2006/03)**

(84) Designated Contracting States:
**AT BE BG CH CY CZ DE DK EE ES FI FR GB GR HU IE IS IT LI LT LU MC NL PL PT RO SE SI SK TR**

(30) Priority: **09.07.2004 JP 2004203333**

(71) Applicant: **Mitsui Chemicals, Inc.**
**Tokyo 105-7117 (JP)**

(72) Inventors:
- **SHIBUYA, Atsushi; c/o Mitsui Chemicals, aura-shi, Chiba; 2990265 (JP)**
- **HIROSE, Toshiyuki; c/o Mitsui Chemicals, aura-shi, Chiba; 2990265 (JP)**

(74) Representative: **Cresswell, Thomas Anthony**
**J.A. KEMP & CO.**
**14 South Square**
**Gray's Inn**
**London WC1R 5JJ (GB)**

# (54) THERMOPLASTIC RESIN

(57) Provided is a thermoplastic resin which enables to obtain a high heat resistant molded product which is small in property changes caused by water absorption and has an excellent optical property, and a molded product formed by the thermoplastic resin. A thermoplastic resin of present invention is a polymer, which glass transition temperature is 130°C or more, a saturated water absorption ratio is 0.1 mass% or less, and a stress-optical coefficient $C_R$ satisfies $|C_R| \leq 3X10^{-10}Pa^{-1}$, obtained by a random additional polymerization of ethylene and tetracyclo[4.4.0. $1^{2,5}.1^{7,10}$]-3-dodecene. A molded product of present invention comprises of the thermoplastic resin.

EP 1 775 312 A1

## Description

TECHNICAL FIELD

The present invention relates to a thermoplastic resin, more specifically, to a thermoplastic resin which enables to obtain highly heat-resistant molded product which is small in property changes caused by water absorption and has an excellent optical properties.

BACKGROUND ART

In recent years, there has been investigated to employ a transparent plastic injection molding lens instead of conventional glass grinding lenses so as to improve productivity and to produce light-weighted products in the optical lenses such as pick-lenses for optical disc optical system, collimator lenses or various lenses for capturing small image. In addition, there has been investigated to employ transparent plastic films instead of a conventional glass substrate so as to improve resistance to breakage, to give light-weighted and thinner film in the field of a flat panel display such as a liquid crystal display element or organic EL display element.

However, plastic generally has an optical anisotropy caused by distortion during molding so that the optical property may be readily deteriorated. As a result, it is necessary to reduce the optical anisotropy. In addition, the optical properties of the plastic change when affected by water absorption. As a result, low water absorption is required. In addition, it is required to have heat resistance so as to guarantee an operation under the condition that the environment using the plastic has high temperature and to make the plastic suitable for plasticity of an oriented film or sealing material and connection process of a driving circuit, and chemical resistance to various kinds of chemicals used in producing process.

As for such a various kinds of requirements, various kinds of resins have been invented. However, these resins have both advantages and disadvantages. It is considered that it is difficult to develop a resin satisfying all the requirements. Therefore, the resin which is deteriorated in several points but excellent in several points is practically selected and used.

As for the resin having an excellent balance between heat resistance and light transmittance, for example, Patent Document 1 discloses that a resin composition having a total light transmittance of 88 % or more, an absolute value of a photoelasticity coefficient of $1.0\times10^{-1}Pa^{-1}$ or less, a glass transition temperature of 120 to 200°C and a saturated water absorption ratio of 0.05 to 1 mass%, and comprising a phosphorus antioxidant of 0.01 to 1 parts by mass, based on 100 parts by mass of a thermoplastic amorphous resin having a moisture content of less than 0.05 mass% is suitable for an optical application. However, in the examples, there is only described a product name Aton G6810 manufactured by JSR Corporation as a thermoplastic amorphous resin having a saturated water absorption ratio of 0.4 mass% and the preferred water absorption ratio is 0.1 % or more. In Patent Document 2, there is published a resin having various structures as a transparent resin having high heat resistance in Table 1. However, the preferred saturated water absorption ratio is also 0.1 mass% or less and examples of a transparent resin having an excellent optical property and heat resistance are not described. In addition, it is hard to say that the resin described above has a sufficiently low photoelasticity coefficient, and the birefringence becomes a problem when the molded product is used for optical applications.

Further, as for the resin having an excellent balance between low water absorption property and light transmittance, for example, Patent Document 3 discloses a resin B having a water absorption ratio of 0.01 % as a resin having the same structure in the reference example 2. However, since the resin B has a low heat transition temperature of 123°C which is an index for heat resistance, and a photoelasticity coefficient of $-4.0 \times 10^{13}$ $cm^2$/dyne, it is not sufficient in low birefringence.

Further, as for the resin having an excellent balance between low water absorption property and light transmittance, for example, Non Patent Document 1 discloses methyl polymethacrylate but this resin has also a low heat deformation temperature of 65 to 100 °C and a high water absorption ratio as mentioned above.

[Patent Document 1] Japanese Unexamined Patent Publication No. 2002-088260

[Patent Document 2] Japanese Unexamined Patent Publication No. H01-240517

[Patent Document 3] Japanese Unexamined Patent Publication No. H09-326512

[Non Patent Document 1] Functional materials Vol. 7, March (1987), p. 21 to 29

DISCLOSURE OF THE INVENTION

It has been required a thermoplastic resin that has a low optical anisotropy caused by a distortion during molding so as not to cause the deterioration in optical properties, that is, the plastic having a low optical anisotropy, and having excellent properties of low water absorption ratio, heat resistance, and chemical resistance.

The present invention includes a thermoplastic resin having a glass transition temperature of 130°C or more, a saturated water absorption ratio of 0.1 mass% or less, and a stress-optical coefficient $C_R$ satisfying $|C_R| \leq 3X10^{-10}Pa^{-1}$.

There is provided a resin that has a low optical anisotropy caused by distortion during molding so as not to cause the deterioration in optical properties, that is, the plastic having a low optical anisotropy, and having excellent properties of low water absorption ratio, heat resistance, and chemical resistance.

BEST MODE FOR CARRYING OUT THE INVENTION

In order to solve the above problems, the present inventors have made extensive studies and found that the problems can be solved by a thermoplastic resin having a glass transition temperature of 130°C or more, a saturated water absorption ratio of 0.1 mass% or less, and a stress-optical coefficient $C_R$ satisfying $|CR| \leq 3X10^{-10}Pa^{-1}$. As a result, the inventors have achieved the present invention.

That is, the present invention includes a thermoplastic resin having a glass transition temperature of 130°C or more, a saturated water absorption ratio of 0.1 mass% or less, and a stress-optical coefficient $C_R$ satisfying $|C_R| \leq 3X10^{-10}Pa^{-1}$, more preferably $|C_R| \leq 2X10^{-10}$ $Pa^{-1}$.

A preferred aspect of the thermoplastic resin of the present invention preferably includes an alicyclic structure in a part of or all of a repeating structure unit.

Further, a preferred aspect of the thermoplastic resin includes one kind or two or more kinds of structure represented by a general formula (1);

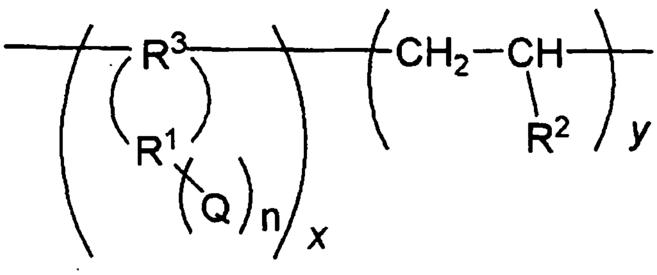

(1)

(wherein, x and y each represents a copolymerization ratio and are real numbers satisfying $0/100 \leq y/x \leq 65/35$, n is a number of a substituent Q and is an integer satisfying $0 \leq n \leq 2$. $R^1$ is one kind or two or more kinds of 2+n valent group of selected from hydrocarbon groups having 2 to 20 carbon atoms, $R^2$ is a hydrogen atom, or one kind or two kinds or more kinds of monovalent group selected from groups having a structure composed of 1 to 10 carbon atom(s) and hydrogen atom(s), $R^3$ is one kind or two or more kinds of tetravalent group selected from hydrocarbon groups having 2 to 20 carbon atoms, and Q is a monovalent group of one kind or two kinds or more selected from structures represented by $COOR^4$ ($R^4$ is a hydrogen atom, or one kind or two kinds or more kinds of monovalent group selected from groups having a structure composed of 1 to 10 carbon atom(s) and hydrogen atom(s).).)

In the general formula (1), $R^1$ group preferably includes at least one ring structure in the structure. In the general formula (1), y/x is preferably a real number satisfying $20/80 \leq y/x \leq 65/35$. In the present invention, a resin composition comprising a resin in the amount of 90 % mass or more is preferably used and used for various types of molded products. The molded product is preferably used for optic applications.

(Glass Transition Temperature)

The thermoplastic resin used in the present invention has a glass transition temperature of 130°C or more, preferably in a range of 130°C or more to 240°C or less, more preferably in a range of 140°C or more to 220°C or less. Among them, the thermoplastic resin in a range of 150°C or more to 220°C or less is most preferable.

When the glass transition temperature is below the range, it is not possible to guarantee an operation under the condition that the using environment is high temperature and it is not suitable for plasticity of oriented film or sealing agent and the connecting process of a driving circuit. When the glass transition temperature is above the range, melt molding may become impossible.

(Measuring Method)

For the measuring method of the thermoplastic resin used in the present invention, a known method can be

employed. The measuring apparatuses are not limited. When a glass transition temperature of a thermoplastic amorphous resin is measured by using a differential scanning calorimeter (DSC), for example, it is generally measured by a differential scanning calorimeter DSC-20 manufactured by Seiko Electronic KK at the condition of temperature elevation rate of 10°C/min.

(Saturated Water Absorption Ratio)

A thermoplastic resin of the present invention has a saturated water absorption ratio of 0.1 mass % or less, preferably 0.05 mass% or less. There is no lower limit of a saturated water absorption ratio for the resin, a resin composition having a saturated water absorption ratio of 0.02 mass% or more is particularly preferable when considering characteristics of adhesion and treatment. When the ratio is below this range, the characteristics of the adhesion and the treatment may be deteriorated. When the ratio is above this range, the resin is affected by the absorption so that the optical property changes.

(Measuring Method)

For the measuring method of the saturated water absorption ratio, a known method can be used. The measuring apparatuses are not limited.

For example, on the basis of ASTM D570, the saturated water absorption ratio is obtained by immersing said molded sheet in distilled water for 1 week at 23°C, and measuring difference between weight before the immersion and weight after the immersion.

(Stress-Optical Coefficient $C_R$)

A stress-optical coefficient is a known constant number disclosed in Collected Papers on Polymers, Vol. 53, No. 10. on pages 603 to 613 (1996), and is a concept on the basis of modified stress-optical regulations (MSOR) describing a relation between the birefringence and the stress in the vicinity of a glass transition region. According to this concept, the stress-optical coefficient can be divided into R component and G component.

The inventors have found that effects of birefringence at the using environment of the molded product apart from the glass transition region are slightly suppressed by selecting the resin having R component of the stress-optical coefficient in a range of $|C_R| \leq 3\times10^{-10}Pa^{-1}$, when the glass transition temperature is 130°C or more and the saturated water absorption ration is 0.1 mass% or less. The stress-optical coefficient of the thermoplastic resin of present invention is preferably in a range of $|CR| \leq 2x10^{-10}Pa^{-1}$. When the constant number is not in such a range, the obtained molded product has a large optical anisotropy, thereby deteriorating the optical property of the product.

(Measuring Method)

As for a measuring method of said stress-optical coefficient, a known method can be used. The measuring apparatuses are not limited. For example, a method may be exemplified in which the stress-optical coefficient $C_R$ is obtained by simultaneously measuring a complex elastic modulus ($E_R$) and a distorted optics ratio (OR) at Tg+10 °C to Tg+30°C using a press sheet having a thickness of 0.5 mm formed by heat press molding a resin at Tg+100°C with a viscoelasticity measuring apparatus in combination with the birefringence measuring apparatus and then calculating by the following calculation (I).

$$C_R = O_R/E_R \qquad (I)$$

(Total Light Transmittance and Spectral light transmittance)

A total light transmittance and a spectral light transmittance are not particularly limited. However, in case of using the thermoplastic resin or the resin composition of the present invention for optical applications, it is necessary to transmit light beam. Therefore, it is preferable to have light transmittance to some degree. The light transmittance is defined by a total light transmittance or a spectral light transmittance according to the applications.

In case of using the resin in total light or a plurality of wavelength region, it is necessary to have good total light transmittance and the total light transmittance is preferably 85% or more, more preferably 88% or more. When the total light transmittance is below this range, a required amount of light can not be obtained. As a measuring method, a known

method can be used. The measuring apparatuses are not limited. On the basis of ASTM D1003, total light transmittance is obtained by molding the thermoplastic resin into the form of a sheet having a thickness of 3mm and measuring the molded sheet using a haze meter.

In case of an optical system (for example, laser optical system) using only a specific wavelength, even when the total light transmittance is not relatively high, it can be still used as long as the spectral light transmittance in the wavelength is good. In this case, the spectral light transmittance in the using light wavelength is preferably 85% or more, more preferably 88% or more. When the spectral light transmittance is below this range, the required amount of light can not be obtained. As a measuring method, a known method can be used. The measuring apparatuses are not limited.

(Thermoplastic resin)

When the thermoplastic resin of the present invention has the glass transition temperature of 130°C or more, and the saturated water absorption ratio of 0.1 mass% or less, the thermoplastic resin is not particularly limited as long as the thermoplastic resin preferably has a R component of the stress optical constant number of $|C_R| \leq 3 \times 10^{-10}$ $Pa^{-1}$, more preferably $|C_R| \leq 2 \times 10^{-10}$ $Pa^{-1}$. Further, an aspect of the thermoplastic resin suitable for the present invention preferably includes an alicyclic structure in a part of or all of a repeating structural unit. Here, structures (a), (b), and (c) mentioned below are exemplified as a preferred structures of the alicyclic structure. More preferably, the thermoplastic resin includes one kind or two or more kinds of structure represented by said general formula (1). Even further preferably, following conditions are given for symbols in said general formula (1), and these conditions are used in combination if necessary.

[1] $R^1$ group includes at least one part of ring structure in structures.
[2] $R^3$ group is exemplified by structures (a), (b), and (c) as an example of the structural unit including this $R^3$ group (in case that n equals to 0).

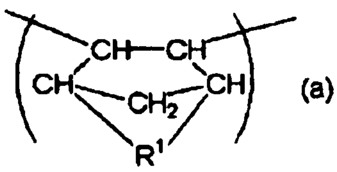 (a) 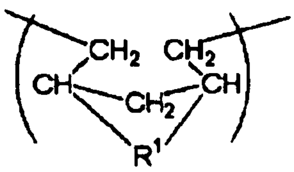 (b) 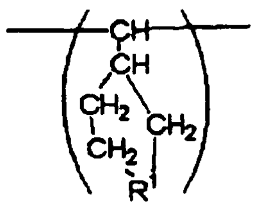 (c)

(where, $R^1$ in the formula is mentioned above.)

[3] n is 0.
[4] y/x is a real number satisfying $20/80 \leq y/x \leq 65/35$.
[5] $R^2$ is a hydrogen atom and/or-$CH_3$.
[6] Q is -COOH or -$COOCH_3$ group.

Here, most preferably, symbols in the general formula (1) have following conditions and these conditions are used in combination with each other if necessary.
[1] $R^1$ group is a divalent group represented by a general formula (2):
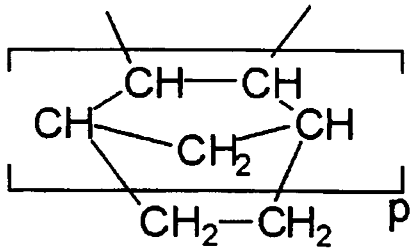

(2)

(where, p is a integral number from 0 to 2.)
More preferably, the $R^1$ group is the divalent group in which p is 1 in the formula (2).
[2] $R^3$ group is an example of a structural unit (in case n equals 0) including this group and is the exemplified structure (a). In the embodiment of combination of these conditions, the most preferred thermoplastic resin is a polymer obtained by a random additional polymerization of ethylene and tetracyclo[4.4.0.$1^{2,5}$.$1^{7,10}$] -3-dodecene. When the thermoplastic resin does not have such a condition in structures, the thermoplastic resin may not has low optical anisotropy which is the excellent property of the resin, caused by distortion during molding, thereby being deteriorated the optical property. That is, when the thermoplastic resin does not have such a condition in structures, the thermoplastic resin may not be the plastic having a small optical anisotropy and the thermoplastic resin may not obtain excellent properties in low absorption ratio, heat resistance, and chemical resistance.
The types of copolymerization are not limited in the present invention. Various types of known copolymers such as a random copolymer, a block copolymer and an alternate copolymer can be employed, but the random copolymer is preferable.

(Other structures used in a part of main chain)

The polymer used in the present invention may have a repeating structural unit derived from other copolymerizable monomers in a scope of not causing deterioration of properties of products obtained by the formation method of the present invention if necessary. The ratio of copolymerization is not limited but it is preferable less than 20 mol % or less, more preferably 10 mol % or less. In case that the ratio of copolymerization is above the range, the optical property is deteriorated so that the optical products having high prescience may not be obtained. In addition, the kinds of the copolymerization are not limited but the random copolymer is preferable.

(Molecular weight of polymers)

A molecular weight of the polymer used for the optical product of the present invention is not limited but a limiting viscosity [η] measured in decalin of 135°C is preferably in a rage of 0.03 to 10 dl/g, more preferably 0.05 to 5 dl/g, most preferably 0.10 to 2 dl/g. The moldability of thermoplastic resin deteriorates when the molecular weight is above the range. The molded product is brittle when the molecular weight is below the range.

(Resin composition)

In the present invention, a resin composition prepared by blending other resins can be used for the polymer if necessary. Other resins can be added within the scope of not disturbing the object of the present invention.

(Additives)

In the polymers used in the present invention, in addition to the constituents mentioned above, a known weathering agent, heat-resistant stabilizer, antistatic agent, fire retardant, slip agent, anti-blocking agent, antifog agent, lubricant, natural oil, synthetic oil, wax, organic or inorganic filler or the like may be blended within the scope of not disturbing the preferred properties of the optical component of the present invention.
For example, specific examples of the weathering agent blended as an arbitrary component include ultraviolet absorbers such as a benzophenone-based compound, a benzotriazole-based compound, a nickel-based compound, and a hindered amine-based compound are given as a light-resistant stabilizer other than a known hindered amine-based additive. The hindered amine-based light-resistant stabilizer is a compound which has 3,5-di-t-butyl-4-hydroxyphenyl group or 2,2,6,6-tetramethylpiperidine group or 1,2,2,6,6-pentamethyl-4-piperidyl group in a structure in general and the specific examples thereof include 1-[2-(3-(3,5-di-t-butyl-4-hydroxyphenyl)propionyloxy)ethyl]-4-(3,3,5-di-t-butyl-4-hydroxyphenyl)propionyloxy]-2,2,6,6- tetramethylpiperidine (for example, Sanol LS-2626 manufactured by Sankyo Co., Ltd.), 2-(3,5-di-t-butyl-4-hydroxybenzyl)-2-n-butylmalonate-bis-(1,2,2,6,6-pentamethyl-4-piperidyl) (for example, Tinuvin 144 manufactured by Chiba-Geigy Japan Ltd.) and the like. Specific examples of the benzotriazole-based ultraviolet absorbers include 2-(5-methyl-2-hydroxyphenyl)benzotriazole, 2,2-hydroxy-3,5-bis(α,α-dimethylbenzyl)phenyl, 2-(2'-hydroxy-5'-methylphenyl)benzotriazole, 2-(2'-hydroxy-3',5'-di-t-butylphenyl)benzotriazole, 2-(2'-hydroxy-3'-t-butyl-5'-methyl-phenyl)-5-chlorobenzotriazole, 2-(2'-hydroxy-3',5'-di-t-butyl-phenyl)-5-chlorobenzotriazole, 2-(2'-hydroxy-4'-n-octoxyphenyl)benzotriazole, benzotriazole derivatives such as Tinuvin 328 and Tinuvin PS (both manufactured by Chiba-Geigy Japan Ltd.), or SEESORB709(2-2'-hydroxy-5'-t-octylphenyl)benzotriazole, manufactured by Shiraishi Calcium Kaisha, LTD), which are commercially available. Specific examples of benzophenone-based ultraviolet absorbers include 2,4-dihydroxybenzophenone, 2-hydroxy-4- methoxybenzophenone, 2,2'-dihydroxy-4-methoxybenzophenone, 2,2'-dihydroxy-4,4'-dimethoxybenzophenone, 2,2'-dihydroxy-4,4'-dimethoxy-5-sulfobenzophenone, 2-hydroxy-4-methoxy-2'-carboxybenzophenone, 2-hydroxy-4-methoxy-5-sulfobenzophenone trihydrate, 2-hydroxy-4-n-octoxy benzophenone, 2-hydroxy-4-octadecyloxy benzophenone, 2-hydroxy-4-n-dodecyloxy benzophenone, 2-hydroxy-4D-benzyloxybenzophenone, 2,2',4,4'-tetrahydroxy benzophenone, 2-hydroxy-4-dodecyloxy benzophenone, 2-hydroxy-4-(2-hydroxy-3- methacryloxy)propoxybenzophenone, or Uvinul 490 (a mixture of 2,2'-dihydroxy-4,4'-dimethoxy benzophenone and other tetrasubstituted benzophenone, manufactured by GAF Corporation), PermylB-100 (benzophenone compound, manufactured by Ferro Corporation).

The specific examples of the heat-resistant stabilizer blended as an arbitrary component include phenolic antioxidants such as tetrakis[methylene-3-(3,5-di-t-butyl-4-hydroxyphenyl)propionate]methane, β-(3,5-di-t-butyl-4-hydroxyphenyl)propionate alkyl ester, and 2,2'-oxamidebis[ethyl-3-(3,5-di-t-butyl-4-hydroxyphenyl)propionate]; fatty acid metal salts such as zinc stearate, calcium stearate, and calcium 1,2-hydroxystearate; and polyalcohol fatty acid esters such as glycerin monostearate, glycerin distearate, pentaerythritol monostearate, pentaerythritol distearate, pentaerythritol tristearate. Further, phosphorous stabilizers such as distearyl pentaerythritol diphosphite, phenyl-4,4'-isopropylidene diphenolpentaerythritol diphosphite, bis(2,6-di-t-butyl-4-methylpehnyl)pentaerythritol diphosphite, and tris(2,4-di-t-butylphenyl)phosphite may be used. These stabilizers may be used in single or in combination with each other. For example, bending of tetrakis[methylene-3-(3,5-di-t-butyl-4-hydroxyphenyl)propionate]methane, zinc stearate, and glycerin monostearate may be exemplified. Theses stabilizers may be used by blending one kind or two kinds or more.

(Molded product, application)

The molded product of the present invention can be molded by a molding method without a limit in particular such as extrusion molding, injection molding, and blow molding. Particularly, the molded product of the present invention is appropriately used for an optical application. For the optical application, optical lenses such as pickup lenses, a transparent seat, an optical disc, and optical fibers are exemplified. Particularly, as for the optical lenses, it is appropriately used for an application of a in-vehicle sensor which requires heat resistance. In addition, the injection molding is suitably used for the optical lens.
A blending method of the ringed olefin-based polymer and other resin components or additives used in the present invention is not limited and a known method can be employed. For example, the method includes simultaneously blending each component.

EXAMPLES

Next, the present invention is further described with reference to the following examples, but it should be construed that the invention is not limited to those examples. A measuring method of physical property is performed by following methods.

(1) Melt flow rate (MFR)

A melt flow rate was measured at 260°C under a load of 2.16Kg, in accordance with ASTM D1238.

(2) Glass transition temperature (Tg)

A glass transition temperature was measured by heating a sample under the condition of temperature elevation up to 250°C at a rate of 10°C/min in nitrogen and then cooling quickly to measure the sample at the rate of 10°C/min by using DSC-20 (manufactured by Seiko Denshi Kogyo K.K)

(3) Saturated water absorption ratio

In accordance with ASTM D570, a saturated water absorption ratio was obtained by immersing said molded sheet in distilled water of 23°C for 1 week, and measuring difference between weight before the immersion and weight after the immersion.

(4) Stress-Optical Coefficient $C_R$

The stress-optical constant was obtained by simultaneously measuring a complex elastic modulus ($E_R$) and a distorted optics ratio (OR) at Tg+10°C to Tg+30 °C using a press sheet having a thickness of 0.5 mm formed by heat press molding a resin at Tg+100°C with a viscoelasticity measuring apparatus in combination with the birefringence measuring apparatus and then calculating by the following calculation (I).

$$C_R = O_R/E_R \qquad (I)$$

(5) Light beam transmittance in 405 nm

By the injection molding, a rectangular board having a length of 65mm, a width of 35mm, and a thickness of 5mm was obtained. A light beam transmittance was measured using this rectangular board with an ultraviolet-visible spectrophotometer.

(6) Retardation value

A retardation value was obtained by measuring a retardation distribution data of the rectangular board in a range of ±5mm of width from the center and in a range of 60mm of length except by 2.5mm of both ends from the total length of 65mm with a KOBRA-CCD/X typed birefringence distribution measuring apparatus manufactured by Oji Scientific Instruments at a wavelength of 590 nm and calculating the average value.

(Synthesis Examples 1 to 3)

Ethylene-tetracyclo[4.4.0.1$^{2,5}$.1$^{7,10}$]-3-dodecene copolymer was obtained by polymerizing according to a known method using vanadium catalyst ($VOCl_3$). The results of physical properties are shown in table 1.

[Table 1]

| Synthesis example No. | MFR | Tg | Saturated water absorption ratio | Stress-optical coefficient $C_R$ | light beam transmittance in 405nm |
|---|---|---|---|---|---|
| | g/10 min | °C | % | $10^{-12}$ $Pa^{-1}$ | % |
| 1 | 2 | 155 | 0.01 | 80 | 85 |
| 2 | 36 | 141 | 0.01 | 190 | 88 |
| 3 | 15 | 124 | 0.00 | 350 | 88 |

(Synthesis Examples 4 and 5)

According to a method disclosed in Japanese Unexamined Patent Publication No. 2002-332312, a complex having a structure of the following Formula (2-A) was obtained.

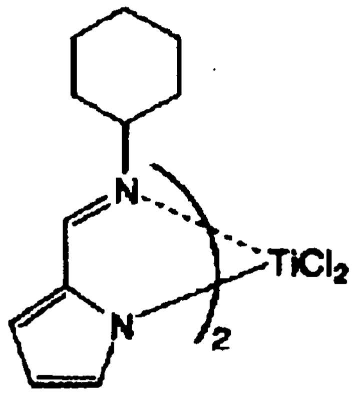

··· (2-A)

Ethylene-tetracyclo[4.4.0.$1^{2,5}$.$1^{7,10}$]-3-dodecene copolymer was obtained by polymerizing with this complex as a catalyst and methylaminoxan as an auxiliary catalyst. The results of evaluated physical properties are shown in Table 2.

[Table 2]

| Synthesis example No. | MFR | Tg | Saturated water absorption ratio | Stress-optical coefficient $C_R$ | light beam transmittance in 405nm |
|---|---|---|---|---|---|
| | g/10 min | °C | % | $10^{-12}Pa^{-1}$ | % |
| 4 | 0.6 | 168 | 0.01 | 20 | 88 |
| 5 | 60 | 131 | 0.01 | 280 | 90 |

(Synthesis Examples 6 and 7)

Ethylene-norbornene copolymer was obtained by polymerizing according to a known method using vanadium catalyst ($VOCl_3$). The results of evaluated physical properties are shown in table 3.

[Table 3]

| Synthesis example No. | MFR | Tg | Saturated water absorption ratio | Stress-optical coefficient $C_R$ | light beam transmittance in 405nm |
|---|---|---|---|---|---|
| | g/10 min | °C | % | $10^{-12}Pa^{-1}$ | % |
| 6 | 5 | 155 | 0.00 | 480 | 83 |
| 7 | 12 | 144 | 0.01 | 660 | 86 |

[Examples 1 to 4, Comparative Examples 1 to 3]

For the polymers obtained in Synthesis Examples 1 to 6, an appearance evaluation and a retardation measurement were performed. The physical properties are shown in table 4.

[Table 4]

| Example/Com parative example No. | Synthesis example No. | Appearance | Retardation value |
|---|---|---|---|
| | | | nm |
| Example 1 | 1 | Good | 19 |

(continued)

| Example/Com parative example No. | Synthesis example No. | Appearance | Retardation value |
|---|---|---|---|
| | | | nm |
| Example 2 | 2 | Good | 45 |
| Example 3 | 4 | Good | 4 |
| Example 4 | 5 | Good | 51 |
| Comparative example 1 | 3 | Good | 110 |
| Comparative example 2 | 6 | Slightly Cloudiness existed | Measurement impossible (Region of 295nm or more existed) |
| Comparative example 3 | 7 | good | Measurement impossible (Region of 295nm or more existed) |

The present invention can be greatly suitably employed in resins, resin composition and molded products used for optical lenses such as pickup lenses for an optical disc, collimator lens or various lenses for capturing small image, or transparent plastic films for flat panel display having liquid crystal display elements and organic EL display elements.

## Claims

**1.** A thermoplastic resin wherein a glass transition temperature is 130°C or more, a saturated water absorption ratio is 0.1 mass% or less, and a stress-optical coefficient $C_R$ satisfies $|CR| \leq 3X10^{-10}Pa^{-1}$.

**2.** A thermoplastic resin wherein a part of or all of repeating structural units comprise an alicyclic structure, a glass transition temperature is 130°C or more, a saturated water absorption ratio is 0.1 mass% or less, and a stress-optical coefficient $C_R$ satisfies $|C_R| \leq 3X10^{-10}Pa^{-1}$.

**3.** The thermoplastic resin as set forth in claim 1 or 2, comprising one kind or two or more kinds of structure represented by a general formula (1):

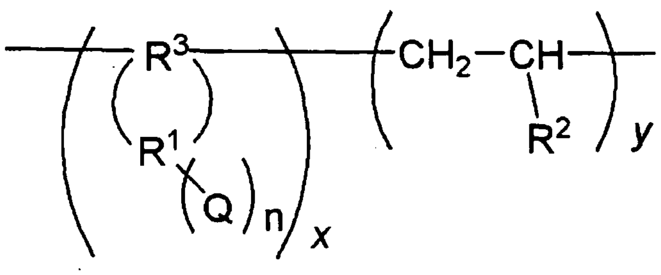

(1)

(wherein, x and y each represents a copolymerization ratio and are a real number satisfying $0/100 \leq y/x \leq 65/35$, n is a number of a substituent Q and is an integer satisfying $0 \leq n \leq 2$. $R^1$ is one kind or two or more kinds of 2+n valent group of selected from hydrocarbon groups having 2 to 20 carbon atoms, $R^2$ is a hydrogen atom, or one kind or two kinds or more kinds of monovalent group selected from groups having a structure composed of 1 to 10 carbon atom(s) and hydrogen atom(s), $R^3$ is one kind or more than two kinds of tetravalent group selected from hydrocarbon radical groups having 2 to 20 carbon atoms, and Q is a monovalent group of one kind or two or more kinds selected from structures represented by $COOR^4$ ($R^4$ is a hydrogen atom, or one kind or two kinds or more kinds of monovalent group selected from groups having a structure composed of 1 to 10 carbon atom(s) and hydrogen atom(s).).)

**4.** The thermoplastic resin as set forth in Claim 3, wherein $R^1$ group comprises at least one ring structure in the structure

represented by general formula (1) in Claim 3.

**5.** The thermoplastic resin as set forth in Claim 3 or 4, wherein y/x is a real number satisfying $20/80 \leq y/x \leq 65/35$ in the general formula (1) in Claim 3.

**6.** A resin composition comprising the resin according to any one of Claims 1 to 5 in the amount of 90 mass % or more.

**7.** A molded product comprising the resin according to any one of Claims 1 to 5, or the resin composition according to Claim 6.

**8.** The molded product wherein the molded product according to Claim 7 is used for optic applications.

**9.** The molded product wherein the molded product according to Claim 7 is the optical element for in-vehicle sensor.

**INTERNATIONAL SEARCH REPORT**

International application No.
PCT/JP2005/011900

A. CLASSIFICATION OF SUBJECT MATTER
Int.Cl[7] C08F32/00, C08L45/00, G02B1/04

According to International Patent Classification (IPC) or to both national classification and IPC

B. FIELDS SEARCHED

Minimum documentation searched (classification system followed by classification symbols)
Int.Cl[7] C08F32/00-32/08, C08L45/00, 02B1/04

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2005 |
| Kokai Jitsuyo Shinan Koho | 1971-2005 | Toroku Jitsuyo Shinan Koho | 1994-2005 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X | JP 2003-321518 A (Mitsui Chemicals, Inc.), 14 November, 2003 (14.11.03), Claims; Par. Nos. [0002] to [0006], [0013] to [0021], [0030] to [0034], [0039] (Family: none) | 1-9 |
| X | JP 2004-107486 A (Mitsui Chemicals, Inc.), 08 April, 2004 (08.04.04), Claims; example 1; Par. No. [0181] (Family: none) | 1-9 |
| X<br>A | JP 2001-74915 A (Mitsui Chemicals, Inc.), 23 March, 2001 (23.03.01), Claims; Par. Nos. [0019], [0024], [0028], [0034] to [0037], [0043] to [0044], [0071], [0085]; example 1 (Family: none) | 1-8<br>9 |

☐ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed

"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| 06 September, 2005 (06.09.05) | 27 September, 2005 (27.09.05) |

| Name and mailing address of the ISA/ | Authorized officer |
|---|---|
| Japanese Patent Office | |
| Facsimile No. | Telephone No. |

Form PCT/ISA/210 (second sheet) (January 2004)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- JP 2002088260 A
- JP H01240517 A
- JP H09326512 A
- JP 2002332312 A


### Non-patent literature cited in the description


- *Functional materials,* 1987, vol. 7, 21-29
- *Collected Papers on Polymers,* 1996, vol. 53 (10), 603-613